(19) Europäisches Patentamt / European Patent Office / Office européen des brevets

(11) **EP 2 751 916 B1**

(12) **FASCICULE DE BREVET EUROPEEN**

(45) Date de publication et mention de la délivrance du brevet:
**13.05.2020 Bulletin 2020/20**

(21) Numéro de dépôt: **12753975.7**

(22) Date de dépôt: **30.08.2012**

(51) Int Cl.:
***H02M 1/088*** (2006.01)

(86) Numéro de dépôt international:
**PCT/EP2012/066916**

(87) Numéro de publication internationale:
**WO 2013/030307 (07.03.2013 Gazette 2013/10)**

(54) **CONVERTISSEUR DE PUISSANCE ÉLEVÉE AVEC DES TRANSISTORS DE FAIBLE PUISSANCE CONNECTÉS EN PARALLÈLE**

LEISTUNGSSTARKER WANDLER MIT PARALLEL GESCHALTETEN NIEDRIGENERGIETRANSISTOREN

HIGH-POWER CONVERTER INCLUDING LOW-POWER TRANSISTORS CONNECTED IN PARALLEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2011 FR 1157748**

(43) Date de publication de la demande:
**09.07.2014 Bulletin 2014/28**

(73) Titulaire: **GE Energy Power Conversion Technology Limited**
**Rugby**
**Warwickshire CV21 1BU (GB)**

(72) Inventeur: **PERMUY, Alfred**
**F-92500 Rueil Malmaison (FR)**

(74) Mandataire: **Serjeants LLP**
**Dock**
**75 Exploration Drive**
**Leicester, LE4 5NU (GB)**

(56) Documents cités:
**EP-B1- 0 525 959      WO-A1-2011/011475**
**FR-A- 1 506 171**

- **"EMC Improvement Guidelines", , 31 août 2003 (2003-08-31), pages 1-17, XP55035423, Atmel's website Extrait de l'Internet: URL:http://www.atmel.com/images/doc4279.pd f [extrait le 2012-08-13]**
- **A Roccaro ET AL: "AC TIG Welding: Output Inverter Design Basics", , 2 October 2003 (2003-10-02), pages 1-18, XP055287470, Retrieved from the Internet: URL:http://www.infineon.com/dgdl/an-1045b. pdf?fileId=5546d462533600a40153559195fb0fa 1 [retrieved on 2016-07-11]**
- **Serge Bontemps: "Parallel Connection of IGBT and MOSFET Power Modules", , 30 November 2004 (2004-11-30), pages 1-8, XP055287462, Retrieved from the Internet: URL:http://www.microsemi.com/document-port al/doc_view/14723-parallel-connection-of-i gbt-mosfet-power-modules [retrieved on 2016-07-11]**

**Description**

La présente invention concerne un système de conversion d'une première tension électrique en une deuxième tension électrique, du type comprenant :

- au moins deux bornes d'entrée et deux bornes de sortie,
- des organes de commutation disposés entre les bornes d'entrée et les bornes de sortie et propres à convertir la première tension en la deuxième tension,

au moins un organe de commutation comprenant au moins deux bras connectés en parallèle, chaque bras comportant un interrupteur électronique commandable entre un état passant et un état bloqué, l'interrupteur comportant une électrode de commande, deux électrodes de conduction, le courant étant propre à circuler entre les électrodes de conduction à l'état passant,

ledit au moins un organe de commutation comportant une borne de commande commune reliée à l'électrode de commande de l'interrupteur de chacun des bras connectés en parallèle, ainsi qu'une première borne de conduction commune et une deuxième borne de conduction commune reliées à une première électrode de conduction, respectivement à une deuxième électrode de conduction de l'interrupteur de chacun des bras connectés en parallèle.

La présente invention s'applique en particulier aux systèmes de conversion présentant une puissance électrique élevée, telle qu'une puissance supérieure à 1MW.

On connait un convertisseur de tension du type précité. Le convertisseur est un onduleur de tension triphasé comportant deux bornes de tension continue d'entrée et une borne de sortie pour chaque phase de la tension triphasée de sortie. L'onduleur triphasé comporte deux branches de commutation pour chaque phase. Chaque branche de commutation est connectée entre la borne de sortie correspondante et une borne d'entrée respective, et comporte un organe de commutation. Les organes de commutation sont propres à convertir la tension continue d'entrée en la tension alternative de sortie.

Afin de permettre la circulation d'un courant d'intensité plus élevée, chaque organe de commutation comporte deux interrupteurs électroniques commandables connectés en parallèle, les électrodes de commande et les électrodes de conduction des deux interrupteurs étant respectivement connectées entre elles. Les interrupteurs sont identiques pour que le courant se répartisse de manière aussi équitable que possible entre les deux interrupteurs.

Toutefois, les deux interrupteurs ne présentent pas toujours des caractéristiques électriques identiques, et sont généralement soumis à des conditions thermiques différentes d'un interrupteur à l'autre en fonction de leur agencement propre. Ceci entraîne alors un déséquilibre du courant entre les deux interrupteurs, en particulier pendant les phases de commutation des interrupteurs, le déséquilibre provoquant dans certains cas la destruction d'un des deux interrupteurs.

FR 1506171 A, WO 2011/011475 A1, "AC TIG Welding: Output Inverter Design Basics" (note d'application) de A. Roccaro et al. et "Parallel Connection of IGBT and MOSFET Power Modules" (note d'application) de S. Bontemps divulguent des systèmes de conversion avec plusieurs bras de commutation en parallèle.

La présente invention est définie par les revendications indépendantes. Des modes de réalisation avantageux sont spécifiés par les revendications dépendantes.

Le but de l'invention est de proposer un système de conversion permettant de réduire le déséquilibre de courant entre des interrupteurs agencés dans des bras parallèles d'un organe de commutation, pendant les phases de commutation des interrupteurs, tout en délivrant un courant présentant la même tension et la même intensité.

A cet effet, l'invention a pour objet un système de conversion du type précité, caractérisé en ce que ledit au moins un organe de commutation comprend en outre, pour chacun des bras connectés en parallèle, une inductance connectée entre une même électrode parmi les deux électrodes de conduction et la borne de conduction commune correspondante, l'inductance présentant une valeur supérieure à 10 nH et sensiblement identique pour chacun des bras connectés en parallèle.

Suivant d'autres aspects avantageux de l'invention, le système de conversion comprend une ou plusieurs des caractéristiques suivantes, prises isolément ou suivant toutes les combinaisons techniquement possibles :

- le système comprend au moins deux organes de commutation comportant au moins deux bras connectés en parallèle, lesdits organes de commutation sont connectés en série les uns des autres, et lesdits organes de commutation comportent chacun un condensateur connecté entre la première borne de conduction commune et la deuxième borne de conduction commune,
- lesdits organes de commutation comportent un ou plusieurs condensateurs connectés en parallèle des bras, en l'absence de résistance connectée en série d'un condensateur correspondant,
- chaque organe de commutation comprend au moins deux bras connectés en parallèle, chaque bras comportant un interrupteur électronique commandable,

- l'interrupteur électronique comporte au moins un transistor parmi le groupe consistant en : un transistor bipolaire, un transistor à effet de champ, un transistor IGBT et un transistor IEGT,
- ladite électrode parmi les deux électrodes de conduction est l'électrode d'émetteur lorsque le transistor est un transistor bipolaire, un transistor IGBT ou un transistor IEGT, et ladite électrode parmi les deux électrodes de conduction est l'électrode de source lorsque le transistor est un transistor à effet de champ,
- l'interrupteur électronique comporte une pluralité de transistors connectés en série,
- l'inductance présente une valeur comprise entre 10 nH et 100 nH,
- le système comprend en outre un circuit imprimé comportant des pistes d'interconnexion des interrupteurs électroniques, et l'inductance est une portion de piste présentant une longueur supérieure à 1 cm,
- l'inductance est une portion de piste présentant une longueur comprise entre 1 cm et 10 cm, et
- ladite portion de piste présente une largeur comprise entre 1 mm et 5 mm.

Ces caractéristiques et avantages de l'invention apparaîtront à la lecture de la description qui va suivre, donnée uniquement à titre d'exemple, et faite en référence aux dessins annexés sur lesquels :

- la figure 1 est une représentation schématique d'un système de conversion selon l'invention, comprenant six organes de commutation propres à convertir la tension d'entrée en une tension de sortie,
- la figure 2 est un schéma électrique de l'organe de commutation de la figure 1 selon un premier mode de réalisation,
- la figure 3 est une vue analogue à celle de la figure 2 selon un deuxième mode de réalisation, et
- la figure 4 est un schéma électrique de deux organes de commutation connectés en série selon un troisième mode de réalisation.

L'invention concerne un système 10 de conversion d'une première tension électrique en une deuxième tension électrique comprenant au moins deux bornes d'entrée 12 et au moins deux bornes de sortie 14. Le système de conversion 10 comprend des organes de commutation 16 disposés entre les bornes d'entrée 12 et les bornes de sortie 14, et propres à convertir la première tension en la deuxième tension.

Le système de conversion est propre à permettre la circulation d'une puissance électrique élevée, par exemple supérieure à 1MW.

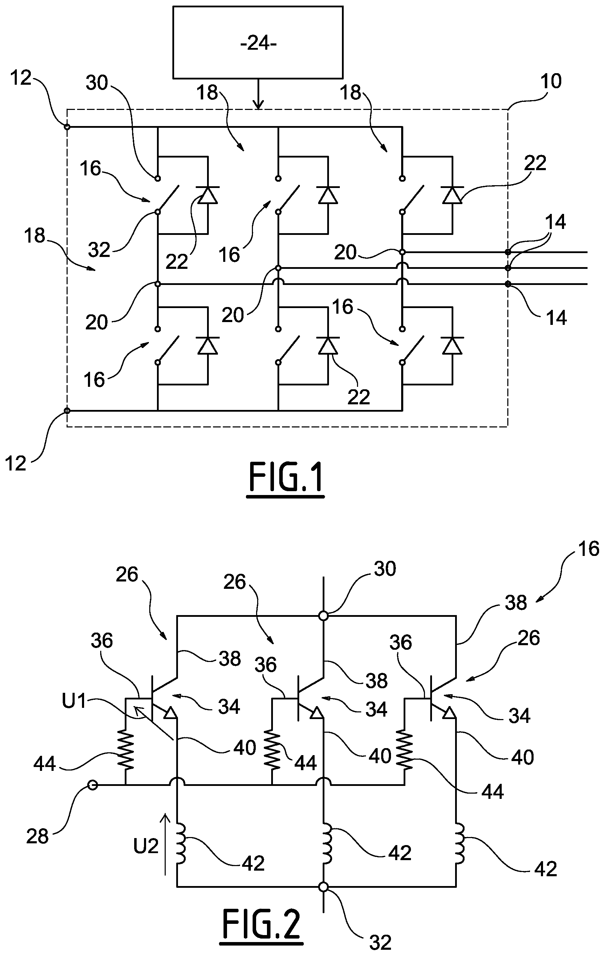

Dans l'exemple de réalisation de la figure 1, le système de conversion 10 est un onduleur de tension propre à convertir une tension continue d'entrée reçue entre les deux bornes d'entrée 12 en une tension alternative de sortie délivrée en chacune des bornes de sortie 14.

L'onduleur de tension 10 comprend deux branches de commutation 18 pour chaque phase de la tension alternative de sortie, chaque branche de commutation 18 étant connectée entre la borne de sortie 14 correspondante et une borne d'entrée 12 respective, et comportant un organe de commutation 16.

L'onduleur de tension comprend une diode 22 connectée en anti-parallèle de chaque organe de commutation 16 et des moyens 24 de commande des organes de commutation.

Dans l'exemple de réalisation de la figure 1, l'onduleur de tension 10 est un onduleur triphasé, et comporte trois bornes de sortie 14 et six branches de commutation 18, à savoir une borne de sortie et deux branches de commutation pour chaque phase de la tension triphasée de sortie.

L'organe de commutation 16, visible sur la figure 2, comprend au moins deux bras 26 connectés en parallèle, une borne de commande commune 28, une première borne de conduction commune 30 et une deuxième borne de conduction commune 32.

Dans l'exemple de réalisation de la figure 2, l'organe de commutation 16 comprend trois bras 26 connectés en parallèle.

Dans l'exemple de réalisation des figures 1 et 2, chacun des organes de commutation 16 comprend au moins deux bras 26 connectés en parallèle, de préférence trois bras 26 connectés en parallèle.

Chaque bras 26 est connecté entre les première et deuxième bornes de conduction commune 30, 32, et comporte un interrupteur électronique 34 commandable entre un état passant et un état bloqué, l'interrupteur 34 comportant une électrode de commande 36, une première électrode de conduction 38 et une deuxième électrode de conduction 40.

Selon l'invention, chaque bras comprend en outre une inductance 42 connectée entre une même électrode parmi les deux électrodes de conduction 38, 40 et la borne de conduction commune 30, 32 correspondante.

En complément, chaque bras 26 comprend une résistance 44 connectée entre l'électrode de commande 36 et la borne de commande commune 28.

Le système de conversion 10 comprend en outre un circuit imprimé, non représenté, comportant des pistes d'interconnexion des interrupteurs électroniques.

La borne de commande commune 28 est reliée, par exemple par l'intermédiaire de la résistance 44, à l'électrode de commande 36 de l'interrupteur de chacun des bras 26 connectés en parallèle. Autrement dit, la borne de commande commune 28 est reliée à l'électrode de commande 36 de chacun des interrupteurs 34 de l'organe de commutation.

La première borne de conduction commune 30 est reliée à la première électrode de conduction 38 de l'interrupteur de chacun des bras 26 connectés en parallèle. Autrement dit, la première borne de conduction commune 30 est reliée à la première électrode de conduction 38 de chacun des interrupteurs 34 de l'organe de commutation.

La deuxième borne de conduction commune 32 est reliée par l'intermédiaire de l'inductance 42 à la deuxième électrode de conduction 40 de l'interrupteur de chacun des bras 26 connectés en parallèle. Autrement dit, la deuxième borne de conduction commune 32 est reliée par l'intermédiaire de l'inductance 42 à la deuxième électrode de conduction 40 de chacun des interrupteurs 34 de l'organe de commutation.

L'interrupteur électronique 34 comporte au moins un transistor parmi le groupe consistant en : un transistor bipolaire, un transistor à effet de champ, un transistor IGBT (de l'anglais Insulated Gâte Bipolar Transistor) et un transistor IEGT (de l'anglais Injection Enhanced Gate Transistor). Dans l'exemple de réalisation de la figure 2, chaque interrupteur électronique 34 est constitué d'un transistor IGBT.

Le ou chaque transistor de l'interrupteur 34 est, par exemple, propre à permettre la circulation d'un courant présentant une tension égale à 1,2 kV ou à 600 V, et une intensité égale à 30 ou 40 A.

Les interrupteurs d'un même organe de commutation 16 comportent des transistors de même type, à savoir des transistors bipolaires, des transistors à effet de champ, des transistors IGBT, ou encore des transistors IEGT. Les transistors d'un même organe de commutation 16, bien que de même type, sont susceptibles de présenter des caractéristiques électriques sensiblement différentes d'un transistor à l'autre.

L'électrode de commande 36 est également appelée électrode de base lorsque l'interrupteur 34 comporte un transistor bipolaire. En variante l'électrode de commande 36 est également appelée électrode de grille lorsque l'interrupteur 34 comporte un transistor à effet de champ, un transistor IGBT ou un transistor IEGT.

La première électrode de conduction 38, respectivement la deuxième électrode de conduction 40, sont également appelées électrode de collecteur, respectivement électrode d'émetteur, lorsque l'interrupteur 34 comporte un transistor bipolaire, un transistor IGBT ou un transistor IEGT.

En variante, la première électrode de conduction 38, respectivement la deuxième électrode de conduction 40, sont également appelées électrode de drain, respectivement électrode de source, lorsque l'interrupteur 34 comporte un transistor à effet de champ.

Dans l'exemple de réalisation de la figure 2, ladite électrode parmi les deux électrodes de conduction 38, 40 qui est connectée à l'inductance 42 est la deuxième électrode de conduction 40. Autrement dit, ladite électrode parmi les deux électrodes de conduction qui est connectée à l'inductance 42 est l'électrode d'émetteur lorsque le transistor est un transistor bipolaire, un transistor IGBT ou un transistor IEGT. En variante, ladite électrode parmi les deux électrodes de conduction qui est connectée à l'inductance 42 est l'électrode de source lorsque le transistor est un transistor à effet de champ.

L'inductance 42 présente une valeur L supérieure à 10nH et est sensiblement identique pour chacun des bras 26 connectés en parallèle. L'inductance 42 présente, par exemple, une valeur L comprise entre 10nH et 100nH.

L'inductance 42 est, par exemple, une portion de piste de circuit imprimé présentant une longueur supérieure à 1 cm, de préférence comprise entre 1 cm et 10 cm, de préférence encore comprise entre 2 cm et 5 cm. La largeur de ladite portion de piste de circuit imprimé est de l'ordre de quelques millimètres, par exemple comprise entre 1 mm et 5 mm.

En variante, l'inductance 42 est un composant passif dédié.

La résistance 44 est un composant passif dédié, et présente une valeur de l'ordre de quelques ohms.

Lors du fonctionnement du système de conversion, une impulsion de commande est appliquée entre la borne de commande commune 28 et la deuxième borne de conduction commune 32, par exemple une impulsion de tension positive afin que les interrupteurs 34 correspondants soient dans leur état passant. Le courant circule alors entre les électrodes de conduction 38, 40 des interrupteurs, et plus généralement entre les bornes de conduction commune 30, 32. La tension positive appliquée entre la borne de commande commune 28 et la deuxième borne de conduction commune 32 correspond à la somme d'une première tension U1 entre l'électrode de commande 36 et la deuxième électrode de conduction 40 de l'interrupteur 34 et d'une deuxième tension U2 aux bornes de l'inductance 42 correspondante, la tension aux bornes de la résistance 44 étant négligeable.

La deuxième tension U2 aux bornes de l'inductance est, par exemple, supérieure à la première tension U1 aux bornes des électrodes de l'interrupteur. Lorsque l'impulsion de commande présente une tension de 15 volts, la première tension U1 est, par exemple, sensiblement égale à 5 volts, tandis que la deuxième tension U2 est sensiblement égale à 10 volts.

En outre, la deuxième tension U2 est définie à l'aide de l'équation suivante :

$$U2 = L \cdot \frac{di}{dt} \qquad\qquad (1)$$

Autrement dit, la valeur L de l'inductance 42 permet donc de contrôler la pente du courant i.

Les propriétés de commutation des interrupteurs 34 sont alors sensiblement identiques d'un bras 26 à l'autre, ce qui permet de réduire le déséquilibre de courant entre les bras 26.

On conçoit ainsi que le système de conversion 10 selon l'invention permet de réduire le déséquilibre de courant entre les interrupteurs 34 agencés dans des bras parallèles 26 de l'organe de commutation 16, tout en délivrant un courant présentant la même tension et la même intensité.

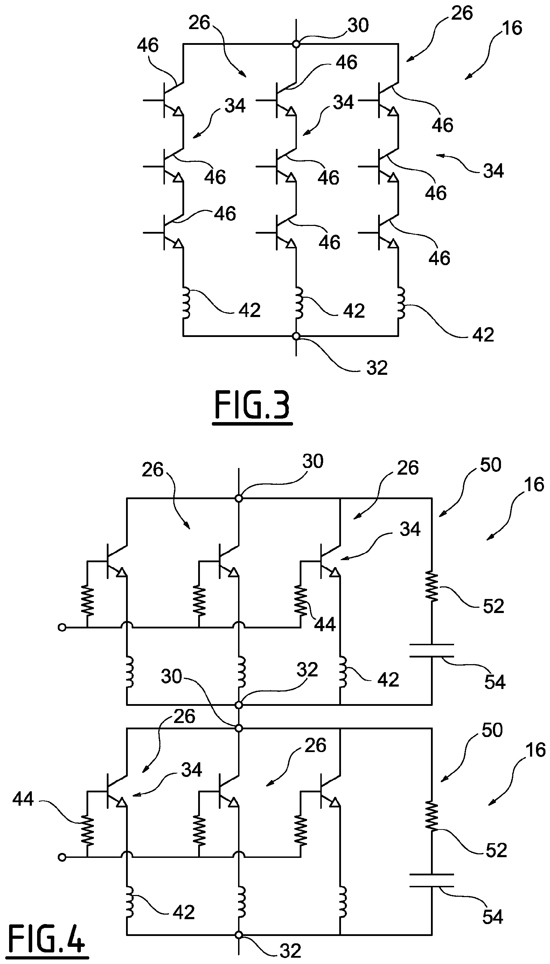

La figure 3 illustre un deuxième mode de réalisation de l'invention pour lequel les éléments analogues au premier mode de réalisation, décrit précédemment, sont repérés par des références identiques, et ne sont donc pas décrits à nouveau.

Selon le deuxième mode de réalisation, l'interrupteur électronique 34 comporte une pluralité de transistors 46 connectés en série.

La première électrode de conduction du premier transistor est reliée à la première borne de conduction commune 30, et la deuxième électrode de conduction du premier transistor est connectée à la première électrode de conduction du deuxième transistor. La deuxième électrode de conduction du deuxième transistor est connectée à la première électrode de conduction du transistor suivant, et ainsi de suite. La deuxième électrode de conduction du dernier des transistors connectés en série est reliée par l'intermédiaire de l'inductance 42 à la deuxième borne de conduction commune 32.

Dans l'exemple de réalisation de la figure 3, l'organe de commutation 16 comporte trois bras 26 connectés en parallèle. Chaque bras 26 est constitué d'un interrupteur 34, et chaque interrupteur 34 comporte trois transistors 46 connectés en série.

Le fonctionnement de ce deuxième mode de réalisation est identique à celui du premier mode de réalisation, et n'est donc pas décrit à nouveau.

La connexion en série des transistors 46 permet d'obtenir une tension délivrée plus importante, par exemple supérieure à 2,5 kV, ou bien permet pour une même tension délivrée d'utiliser des transistors de plus faible tension.

Les autres avantages de ce deuxième mode de réalisation sont identiques à celui du premier mode de réalisation, et ne sont donc pas décrits à nouveau.

La figure 4 illustre un troisième mode de réalisation de l'invention pour lequel les éléments analogues au premier mode de réalisation, décrit précédemment, sont repérés par des références identiques, et ne sont donc pas décrits à nouveau.

Selon le troisième mode de réalisation, deux organes de commutation 16 sont connectés en série.

Chaque branche de commutation 18 comporte, par exemple, deux organes de commutation 16 connectés en série, afin d'obtenir une tension délivrée plus importante.

Chaque organe de commutation 16 comporte au moins deux bras 26 connectés en parallèle et un bras additionnel 50 connecté en parallèle desdits bras 26 entre les bornes de conduction commune 30, 32.

Dans l'exemple de réalisation de la figure 4, chaque organe de commutation 16 comprend trois bras 26 connectés en parallèle, chaque bras 26 comportant l'interrupteur électronique 34, l'inductance 42 et la résistance 44.

Les moyens de commande 24 sont des moyens de commande en courant des interrupteurs 34 de chacun des organes de commutation.

Le bras additionnel 50 comporte une résistance 52 et un condensateur 54 connectés en série. Autrement dit, chaque organe de commutation 16 comprend, en outre par rapport au premier mode de réalisation, la résistance 52 et le condensateur 54 connectés en série entre la première borne de conduction commune 30 et la deuxième borne de conduction commune 32.

En variante, le bras additionnel 50 comporte seulement un condensateur en l'absence de résistance connectée en série du condensateur.

La résistance 52 est une résistance d'amortissement des tensions parasites susceptibles d'apparaître à haute fréquence, par exemple pour des fréquences supérieures à 1 MHz. La résistance 52 présente une impédance de l'ordre de quelques ohms.

Le condensateur 54 est propre à absorber une majeure partie du courant et à limiter la dérivée de la tension par rapport au temps. Le condensateur 54 présente une capacité C de valeur, par exemple, comprise entre N et 10xN nF, de préférence égale à 5xN nF, où N représente le nombre de bras 26 connectés en parallèle.

En variante, chaque organe de commutation 16 comporte un bras additionnel 50 connecté en parallèle de chaque bras 26 respectif entre les bornes de conduction commune 30, 32. Autrement dit, chaque organe de commutation 16 comporte N bras additionnels 50, où N représente le nombre de bras 26 connectés en parallèle. Chaque bras additionnel 50 comporte une résistance 52 et un condensateur 54 connectés en série. Selon cette variante, le condensateur 54 présente une capacité de l'ordre de quelques nF, de valeur par exemple comprise entre 1 et 10 nF, de préférence égale à 5 nF.

En variante, chaque bras additionnel 50 comporte seulement un condensateur en l'absence de résistance connectée en série du condensateur.

**EP 2 751 916 B1**

Lors de la commutation des transistors IGBT ou IEGT des interrupteurs 34, des charges résiduelles restent dans les transistors et forment des courants parasites, également appelés courants de queue (de l'anglais tail current). Ces courants de queue créent notamment des déséquilibres de tension au niveau des bornes de conduction entre les organes de commutation 16 en série.

Ces déséquilibres de tension dus à des charges en excès apparaissent également lors de la commutation des diodes connectées en antiparallèle de chaque transistor, qu'il s'agisse de transistors MOSFET, IGBT ou encore IEGT.

Le condensateur 54 permet alors de convertir les charges q en excès en une tension V selon l'équation :

$$dV = \frac{dq}{C} \qquad (2)$$

Plus la valeur de la capacité C du condensateur 54 est élevée, plus le déséquilibre de tension sera faible.

La présence de l'inductance 42 permet de connecter le condensateur 54 en parallèle des interrupteurs 34, car elle limite le courant de décharge du condensateur 54.

Les inductances 42 permettent de réduire les déséquilibres de courant entre les bras 26 connectés en parallèle, et les condensateurs 54 permettent de réduire les déséquilibres de tension entre les organes de commutation 16 connectés en série.

Le système de conversion selon le troisième mode de réalisation permet alors d'obtenir une tension de sortie de valeur plus importante, de par la connexion en série des organes de commutation 16, tout en limitant les déséquilibres de tension entre lesdits organes de commutation connectés en série, la dérivée par rapport au temps de la tension aux bornes de chaque organe de commutation 16 étant contrôlée via valeur de la capacité de chaque condensateur 54.

Les autres aspects du fonctionnement de ce troisième mode de réalisation sont analogues à ceux du premier mode de réalisation décrit précédemment, et ne sont donc pas décrits à nouveau.

Les autres avantages de ce troisième mode de réalisation sont analogues à ceux du premier mode de réalisation décrit précédemment, et ne sont donc pas décrits à nouveau.

On conçoit ainsi que le système de conversion 10 selon l'invention permet de réduire le déséquilibre de courant entre les interrupteurs 34 agencés dans des bras parallèles 26 de l'organe de commutation 16, pendant les phases de commutation des interrupteurs 34, tout en délivrant une tension de sortie de valeur élevée, par exemple supérieure à 2,5 kV.

**Revendications**

1. Système (10) de conversion d'une première tension électrique en une deuxième tension électrique, du type comprenant :

   - au moins deux bornes d'entrée (12) et deux bornes de sortie (14),
   - des organes de commutation (16) disposés entre les bornes d'entrée (12) et les bornes de sortie (14) et propres à convertir la première tension en la deuxième tension,

   au moins un organe de commutation (16) comprenant au moins deux bras (26) connectés en parallèle, chaque bras (26) comportant un interrupteur électronique (34) commandable entre un état passant et un état bloqué, l'interrupteur (34) comportant une électrode de commande (36), deux électrodes de conduction (38, 40), le courant étant propre à circuler entre les électrodes de conduction (38, 40) à l'état passant,
   ledit au moins un organe de commutation (16) comportant une borne de commande commune (28) reliée à l'électrode de commande (36) de l'interrupteur de chacun des bras (26) connectés en parallèle, ainsi qu'une première borne de conduction commune (30) et une deuxième borne de conduction commune (32) reliées à une première électrode de conduction (38), respectivement à une deuxième électrode de conduction (40) de l'interrupteur (34) de chacun des bras (26) connectés en parallèle,
   ledit au moins un organe de commutation (16) comprenant en outre, pour chacun des bras (26) connectés en parallèle, une inductance (42) connectée entre une même électrode parmi les deux électrodes de conduction (38, 40) et la borne de conduction commune (30, 32) correspondante, l'inductance (42) présentant une valeur (L) supérieure à 10 nH et sensiblement identique pour chacun des bras (26) connectés en parallèle, le système (10) comprenant en outre un circuit imprimé comportant des pistes d'interconnexion des interrupteurs électroniques, dans lequel l'inductance (42) est une portion de piste présentant une longueur supérieure à 1 cm.

2. Système (10) selon la revendication 1, dans lequel le système (10) comprend au moins deux organes de commutation (16) comportant au moins deux bras (26) connectés en parallèle, dans lequel lesdits organes de commutation (16) sont connectés en série les uns des autres, et dans lequel lesdits organes de commutation (16) comportent chacun un condensateur (54) connecté entre la première borne de conduction commune (30) et la deuxième borne de conduction commune (32).

3. Système (10) selon la revendication 2, dans lequel lesdits organes de commutation (16) comportent un ou plusieurs condensateurs (54) connectés en parallèle des bras (26) en l'absence de résistance connectée en série d'un condensateur (54) correspondant.

4. Système (10) selon l'une quelconque des revendications précédentes, dans lequel chaque organe de commutation (16) comprend au moins deux bras (26) connectés en parallèle, chaque bras (26) comportant un interrupteur électronique commandable (34).

5. Système (10) selon l'une quelconque des revendications précédentes, dans lequel l'interrupteur électronique (34) comporte au moins un transistor (46) parmi le groupe consistant en : un transistor bipolaire, un transistor à effet de champ, un transistor IGBT et un transistor IEGT.

6. Système (10) selon la revendication 5, dans lequel ladite électrode parmi les deux électrodes de conduction (38, 40) est l'électrode d'émetteur (40) lorsque le transistor est un transistor bipolaire, un transistor IGBT ou un transistor IEGT, et ladite électrode parmi les deux électrodes de conduction est l'électrode de source lorsque le transistor est un transistor à effet de champ.

7. Système (10) selon l'une quelconque des revendications précédentes, dans lequel l'interrupteur électronique (34) comporte une pluralité de transistors (46) connectés en série.

8. Système (10) selon l'une quelconque des revendications précédentes, dans lequel l'inductance (42) présente une valeur (L) comprise entre 10 nH et 100 nH.

9. Système (10) selon la revendication 8, dans lequel l'inductance (42) est une portion de piste présentant une longueur comprise entre 1 cm et 10 cm.

10. Système (10) selon la revendication 9, dans lequel ladite portion de piste présente une largeur comprise entre 1 mm et 5 mm.

**Patentansprüche**

1. System (10) zur Umwandlung einer ersten elektrischen Spannung in eine zweite elektrische Spannung des Typs, der umfasst:

   - mindestens zwei Eingangsanschlüsse (12) und zwei Ausgangsanschlüsse (14),
   - Schaltorgane (16), die zwischen den Eingangsanschlüssen (12) und den Ausgangsanschlüssen (14) angeordnet sind und geeignet sind, die erste Spannung in die zweite Spannung umzuwandeln,

   wobei mindestens ein Schaltorgan (16) mindestens zwei Arme (26) umfasst, die parallel verbunden sind, wobei jeder Arm (26) einen elektronischen Schalter (34) aufweist, der zwischen einem Durchgangszustand und einem Sperrzustand steuerbar ist, wobei der Schalter (34) eine Steuerelektrode (36) und zwei Leitungselektroden (38, 40) aufweist, wobei der Strom geeignet ist, im Durchgangszustand zwischen den Leitungselektroden (38, 40) zufließen, wobei das mindestens eine Schaltorgan (16) einen gemeinsamen Steueranschluss (28), der an der Steuerelektrode (36) des Schalters von jedem der Arme (26), die parallel verbunden sind, angeschlossen ist, sowie einen ersten gemeinsamen Leitungsanschluss (30) und einen zweiten gemeinsamen Leitungsanschluss (32) aufweist, die an einer ersten Leitungselektrode (38) und jeweils einer zweiten Leitungselektrode (40) des Schalters (34) von jedem der Arme (26), die parallel verbunden sind, angeschlossen sind, wobei das mindestens eine Schaltorgan (16) ferner für jeden der Arme (26), die parallel verbunden sind, eine Induktivität (42) umfasst, die zwischen einer gleichen Elektrode von den zwei Leitungselektroden (38, 40) und dem entsprechenden gemeinsamen Leitungsanschluss (30, 32) verbunden ist, wobei die Induktivität (42) einen Wert (L) von mehr als 10 nH vorweist und für jeden der Arme (26), die parallel verbunden sind, im Wesentlichen identisch ist, wobei das System (10) ferner eine gedruckte Schaltung umfasst, die Verbindungsbahnen von elektronischen Schaltern aufweist, wobei die Induktivität (42) ein Bahnabschnitt ist, der eine Länge von mehr als 1 cm vorweist.

2. System (10) nach Anspruch 1, wobei das System (10) mindestens zwei Schaltorgane (16) umfasst, die mindestens zwei Arme (26), die parallel verbunden sind, aufweisen, in denen die Schaltorgane (16) in Reihe miteinander verbunden sind, und wobei die Schaltorgane (16) jeweils einen Kondensator (54) aufweisen, der zwischen den ersten gemeinsamen Leitungsanschluss (30) und den zweiten gemeinsamen Leitungsanschluss (32) verbunden ist.

3. System (10) nach Anspruch 2, wobei die Schaltorgane (16) einen oder mehrere Kondensatoren (54) aufweisen, die parallel zu den Armen (26) in Abwesenheit von einem Widerstand, der mit einem entsprechenden Kondensator (54) in Reihe verbunden ist, verbunden sind.

4. System (10) nach einem der vorhergehenden Ansprüche, wobei jedes Schaltorgan (16) mindestens zwei Arme (26), die parallel verbunden sind, umfasst, wobei jeder Arm (26) einen steuerbaren elektronischen Schalter (34) aufweist.

5. System (10) nach einem der vorhergehenden Ansprüche, wobei der elektronische Schalter (34) mindestens einen Transistor (46) aus der Gruppe umfasst, die besteht aus: einem Bipolartransistor, einem Feldeffekttransistor, einem IGBT-Transistor und einem IEGT-Transistor.

6. System (10) nach Anspruch 5, wobei die Elektrode unter den zwei Leitungselektroden (38, 40) die Emitterelektrode (40) ist, wenn der Transistor ein Bipolartransistor, ein IGBT-Transistor oder ein IEGT-Transistor ist, und wobei die Elektrode unter den zwei Leitungselektroden die Source-Elektrode ist, wenn der Transistor ein Feldeffekttransistor ist.

7. System (10) nach einem der vorhergehenden Ansprüche, wobei der elektronische Schalter (34) mehrere in Reihe geschaltete Transistoren (46) aufweist.

8. System (10) nach einem der vorhergehenden Ansprüche, wobei die Induktivität (42) einen Wert (L) zwischen 10 nH und 100 nH vorweist.

9. System (10) nach Anspruch 8, wobei die Induktivität (42) ein Bahnabschnitt ist, der eine Länge zwischen 1 cm und 10 cm vorweist.

10. System (10) nach Anspruch 9, wobei der Bahnabschnitt eine Breite zwischen 1 mm und 5 mm vorweist.

**Claims**

1. System (10) for converting a first electric voltage into a second electric voltage, of the type comprising:

   - at least two input terminals (12) and two output terminals (14),
   - switching members (16) disposed between the input terminals (12) and the output terminals (14) and which can convert the first voltage into the second voltage,

   at least one switching member (16) comprising at least two arms (26) connected in parallel, with each arm (26) comprising an electronic switch (34) that can be controlled such as to occupy either an on-state or an off-state, with the switch (34) comprising a control electrode (36), two conduction electrodes (38, 40), with the current able to flow between the conduction electrodes (38, 40) in the on-state,
   said at least one switching member (16) comprising a common control terminal (28) connected to the control electrode (36) of the switch of each one of the arms (26) connected in parallel, as well as a first common conduction terminal (30) and a second common conduction terminal (32) connected to a first conduction electrode (38), respectively to a second conduction electrode (40) of the switch (34) of each one of the arms (26) connected in parallel,
   said at least one switching member (16) further comprising, for each one of the arms (26) connected in parallel, an inductance (42) connected between the same single electrode from the two conduction electrodes (38, 40) and the corresponding common conduction terminal (30, 32), the inductance (42) having a value (L) greater than 10 nH and substantially identical for each one of the arms (26) connected in parallel, with the system (10) further comprising a printed circuit comprising tracks for interconnecting electronic switches, wherein the inductance (42) is a track portion that has a length greater than 1 cm.

**2.** System (10) according to claim 1, wherein le system (10) comprises at least two switching members (16) comprising at least two arms (26) connected in parallel, wherein said switching members (16) are connected in series to one another, and wherein said switching members (16) each comprise a capacitor (54) connected between the first common conduction terminal (30) and the second common conduction terminal (32).

**3.** System (10) according to claim 2, wherein said switching members (16) comprise one or several capacitors (54) connected in parallel of the arms (26) in the absence of a resistor connected in series of a corresponding capacitor (54).

**4.** System (10) according to any preceding claim, wherein each switching member (16) comprises at least two arms (26) connected in parallel, with each arm (26) comprising an electronic switch (34) that can be controlled.

**5.** System (10) according to any preceding claim, wherein the electronic switch (34) comprises at least one transistor (46) from the group comprised of: a bipolar transistor, a field effect transistor, an IGBT transistor and an IEGT transistor.

**6.** System (10) according to claim 5, wherein said electrode from the two conduction electrodes (38, 40) is the transmitter electrode (40) when the transistor is a bipolar transistor, an IGBT transistor or an IEGT transistor, and said electrode from the two conduction electrodes is the source electrode when the transistor is a field effect transistor.

**7.** System (10) according to any preceding claim, wherein the electronic switch (34) comprises a plurality of transistors (46) connected in series.

**8.** System (10) according to any preceding claim, wherein the inductance (42) has a value (L) between 10 nH and 100 nH.

**9.** System (10) according to claim 8, wherein the inductance (42) is a track portion that has a length between 1 cm and 10 cm.

**10.** System (10) according to claim 9, wherein said track portion has a width between 1 mm and 5 mm.

## FIG.1

## FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1506171 A

- WO 2011011475 A1